(19) Europäisches Patentamt
European Patent Office
Office européen des brevets

(11) Publication number: **0 079 144**
**B1**

(12) # EUROPEAN PATENT SPECIFICATION

(45) Date of publication of patent specification: **29.01.86**

(51) Int. Cl.$^4$: **C 08 G 75/02**

(21) Application number: **82305560.3**

(22) Date of filing: **19.10.82**

(54) **Process for producing aromatic sulfide polymers.**

(30) Priority: **20.10.81 JP 167573/81**

(43) Date of publication of application:
**18.05.83 Bulletin 83/20**

(45) Publication of the grant of the patent:
**29.01.86 Bulletin 86/05**

(84) Designated Contracting States:
**DE FR GB NL**

(56) References cited:
**US-A-2 538 941**
**US-A-3 878 176**

**Chemical Abstracts vol. 89, no.14, 2 October 1978,Columbus, Ohio, USA B. HORTLING et al. "The formation of poly(phenylene sulfide)s and the substituent effect in reactions of substituted chlorobenzenes with sulfur", page 41, column 2, abstract no. 110920v**

(73) Proprietor: **KUREHA KAGAKU KOGYO KABUSHIKI KAISHA**
**9-11 Horidome-cho 1-chome Nihonbashi**
**Chuo-ku**
**Tokyo (JP)**

(72) Inventor: **Shiiki, Zenya**
**1-6 Ochiai Nishiki-machi**
**Iwaki-shi Fukushima-ken (JP)**
Inventor: **Kawakami, Yukichika**
**25-13 Negoya Ueda-machi**
**Iwaki-shi Fukushima-ken (JP)**

(74) Representative: **Myerscough, Philip Boyd et al**
**J.A.Kemp & Co. 14, South Square Gray's Inn**
**London, WC1R 5EU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 079 144 B1

Courier Press, Leamington Spa, England.

**Description**

The present invention relates to a process for producing an aromatic sulfide polymer while using elemental sulfur as a source of sulfur and an aldehyde or condensate thereof which may be an aldehyde homopolymer such as paraformaldehyde or metaldehyde which can act as an aldehyde source.

Thermoplastic resins of high thermal resistance have come to be required more and more for mechanical parts and electronic machinery parts. Aromatic sulfide polymers are one of the resins which can respond to such a requirement.

As processes for producing aromatic sulfide polymers using elemental sulfur, as it is as the most inexpensive raw material for sulfur, for example the following processes are known:—

(1) A process wherein elemental sulfur, dichlorobenzene and an inorganic base such as sodium carbonate are brought simultaneously into the molten state and react without using any solvent (refer to U.S. Patent Nos. 2,513,188 and 2,538,941), and

(2) A process wherein elemental sulfur, dichlorobenzene and an inorganic base such as sodium carbonate are brought into reaction in a polar solvent (refer to U.S. patent No. 3 878 176).

However, in the conventional processes mentioned above, an excess oxygen are stoichiometrically produced as shown in the following formula:

$$\left\{\begin{array}{l} n\cdot S + n\cdot(X - Ar - X) + 2n\cdot MOH \rightarrow \\ \qquad -\!\!\left(Ar - S\right)\!\!-_n + 2n\cdot MX + n\cdot H_2O + n\cdot[O] \\ n\cdot S + n\cdot(X - Ar - X) + n\cdot M_2CO_3 \rightarrow \\ \qquad -\!\!\left(Ar - S\right)\!\!-_n + 2n\cdot MX + n\cdot CO_2 + n\cdot[O] \end{array}\right.$$

wherein X, Ar and M represent respectively a halogen atom, an aromatic ring and an alkali metal atom and n represents a positive integer.

The thus produced excess oxygen is considered to cause side reactions such as oxidation, hydrogen-pulling reaction, cyclization by condensation and secondary reactions accompanied therewith, with the elementary sulfur, sulfur atom which is bound to the terminal parts or the inner parts of the thus formed polymer and hydrogen atom which is bound to the polymer or the solvent molecule, thus resulting in inhibition of smooth proceeding of polymerization and in causing pitchfication and carbonization of the polymer. In this manner, as the excess oxygen inhibits the normal proceeding of polymerization, the conventional processes have various demerits such as i) the yield of the polymer is low, ii) only polymer of low molecular weight is obtained, iii) pitchfication and carbonization of the polymer may be apt to occur, and iv) the aromatic sulfide polymer having physical properties sufficient for practical ue cannot be obtained.

Moreover, in conventional processes the gaseous carbon dioxide exists in the polymerization system. Such an existence is not desirable because it makes the improvement of the yield of the polymer difficult.

It is an object of the present invention to provide a process for producing aromatic sulfide polymer while using the elementary sulfur without the above-mentioned demerits.

A process for producing the aromatic sulfide polymer according to the present invention (hereinafter referred to as the present process) is the polymerization process accompanied by the reduction, comprising making an elementary sulfur, a polyhalogen-substituted aromatic compound, an aldehyde or condensate thereof as a reductant to remove the excess oxygen and a caustic alkali as a scavenger of gaseous carbon dioxide coexistent in an organic solvent to bring them into reaction. According to the present process, the polymerization process proceeds speedy and smoothly while preventing the noxious reactions due to the excess oxygen and the gaseous carbon dioxide.

The principal mechanism of the present process is presumably as follows:

i) in the case where paraformaldehyde is used as the reductant;

$$n\cdot S + n\cdot(X - Ar - X) + n\cdot\frac{1}{2m}(CH_2O)_m + 3n\cdot MOH$$

$$\longrightarrow -\!\!\left(Ar - S\right)\!\!-_n + 2n\cdot MX + 2n\cdot H_2O +$$

$$\frac{1}{2}n\cdot M_2CO_3$$

ii) in the case where paraldehyde is used as the reductant;

$$n\cdot S + n\cdot(X - Ar - X) + n\cdot\frac{1}{m}(CH_3CHO)_m + 3n\cdot MOH \rightarrow -\!\!\left(Ar - S\right)\!\!-_n + 2n\cdot MX + 2n\cdot H_2O + n\cdot CH_3COOM$$

wherein X, Ar, M and n are as defined above and m is the number of base units of aldehyde.

In the present process, the excess oxygen is removed from the reaction system as water. And, since the thus formed amount of water is 2 mols per 1 mol of sulfur, it is considered that such a very small amount of water does not inhibit the polymerization nor decompose the polymer or the solvent, and that, on the contrary, the very small amount of water formed in the above-mentioned reaction is effective in preventing the decomposition of the polymer and the solvent.

Further, in the present process, not gaseous carbon dioxide and carboxylic acid but carbonate salts and carboxylate salts are formed and so the polymerization degree of the aromatic sulfide polymer is hopefully improved.

In addition, particularly in the case of i), there is a merit of being able to synthesize the aromatic sulfide polymer smoothly and to rise the yield of polymer while sufficiently raising the concentration of the starting materials in the initial charge since the formed amount of the carbonate salt as the by-product is relatively small resulting in the small raise of viscosity of the reaction system.

As the other process for producing the aromatic sulfide polymer, the process wherein sulfide of alkali metal, particularly sodium sulfide nonahydrate, $Na_2S\cdot 9H_2O$, is used as the starting material instead of the elementary sulfur have been known (refer to U.S. Patent Nos. 3 919 177, 3 354 129). In these processes, there is a demerit that the excess water of crystallization in $Na_2S\cdot 9H_2O$ should be removed by a troublesome process.

On the contrary, in the present process the dehydration step is quite unnecessary since anhydrous compounds are used as the starting materials. It is a large merit of the present invention.

Furthermore, while in the above-mentioned conventional process the use of potassium sulfide, $K_2S$, as the sulfur source scarcely give the polymer, the polymer can be obtained even by the combination of the elementary sulfur and potassium hydroxide in the present process. From these facts, it is presumed that the process of polymerization accompanied by the reduction of the present invention proceeds in a quite different mechanism from that of the processes wherein sulfide of alkali metal is used.

As the elementary sulfur which is one of the starting materials of the present process, rhombic sulfur, monoclinic sulfur or amorphous sulfur may be used. The elementary sulfur has preferably a fine powdery form for its close contact with other reactants, the polyhalogen-substituted aromatic compound, the aldehyde or condensate thereof and the caustic alkali to make a rapid and smooth reaction between them.

As the polyhalogen-substituted aromatic compound which is also one of the starting materials of the present process, the compound represented by the following general formula may be used.

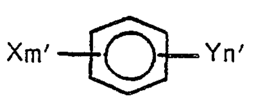

(A)

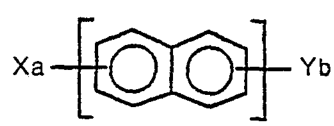

(B)

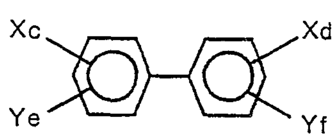

(C)

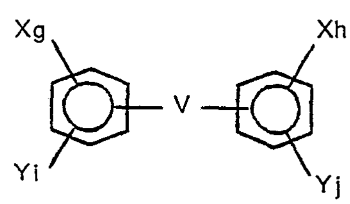

(D)

wherein X is a halogen atom, preferably chlorine and bromine; Y represents —R, —OR or —COOR wherein R is one selected from the group consisting of a hydrogen atom, alkyl groups, cycloalkyl groups, aryl groups and aralkyl groups; V is one selected from the group consisting of —O—, —S—, —SO—, $-SO_2-$,

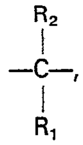 and 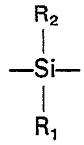

wherein $R_1$ and $R_2$ are same or different and are selected from a group consisting a hydrogen atom, alkyl group, cycloalkyl group, aryl group and aralkyl group, and m', n', a, b, c, d, e, f, g, h, i and j respectively represent the positive integer defined by the following conditions:

$2\leqq m'\leqq 6$, $0\leqq n'\leqq 4$, $2\leqq a\leqq 8$, $0\leqq b\leqq 6$, $1\leqq c$, $5\geqq d$, $0\leqq e$,
$4\geqq f$, $1\leqq g$, $5\geqq h$, $0\leqq i$ and $4\geqq j$.

Among the compounds represented by the above-mentioned formula, those which have 2 or 3 halogen atoms are preferable and those which have 2 halogen atoms are particularly preferable. As the polyhalogen-substituted aromatic compounds, the following compounds may be exemplified; p-dichlorobenzene, m-dichlorobenzene, p-dibromobenzene, 1,3,5-trichlorobenzene, 1-methoxy-2,5-dichlorobenzene, 2,5-dichlorotoluene, 1,4-dichloronaphthalene, 4,4'-dichlorobiphenyl, 4,4'-dichlorodiphenyl ether, 3,5-dichlorobenzoic acid, 3,3'-dichlorodiphenyl sulfone, 3,3'-dichlorodiphenyl sulfoxide and 3,3'-dichlorodiphenyl sulfide. Particularly, it is suitable to use p-dichlorobenzene, m-dichlorobenzene, 1,3,5-trichlorobenzene and 3,3'-dichlorodiphenyl sulfone in the present process.

As the reductant used as a scavenger of the excess oxygen in a case of coexistence of other reactants in the reaction system, formaldehyde, glyoxal, aldehydes represented by the formula

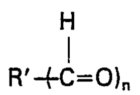 or 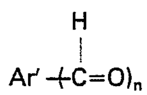

wherein R' represents an alkyl group, Ar' represents an aryl group or an aralkyl group and n represents a positive integer, or the condensates thereof, for instance, acetaldehyde, propionaldehyde, butylaldehyde, benzaldehyde, paraformaldehyde(PFA), trioxane(TOX), polyoxymethylene(POM), paraldehyde and metaldehyde may be used. Particularly, the condensates of aldehydes are preferable from the reason of convenience in handling. Among the condensates, paraformaldehyde makes the proceedings of polymerization very smooth and so, it is particularly more preferable.

As has been stated above, the use of anhydrous aldehyde or a condensate thereof omits any dehydrating treatment in advance of polymerization and accordingly, it is one of the merits of the present process that the process of polymerization is simple and energy can be greatly saved.

As the caustic alkali used in the present process for scavenging gaseous carbon dioxide formed in the reaction, hydroxides of alkali metals, preferably those of lithium, sodium, potassium and rubidium may be used. Although it is recognized that a hydroxide or oxide of an alkaline earth metal such as calcium, magnesium, barium and the like has the similar effects, the use of such hydroxide or oxide of an alkaline earth metal is not favorable because of the fear of the concurrent of a noxious side reaction with the sulfur, resulting in the formation of insoluble salt(s). And, the caustic alkali had preferably a fine powdery or flaky form for its close contact with gaseous carbon dioxide to form its carbonate salt smoothly.

As the medium of the present process, an organic solvent which can completely or partially dissolve the elementary sulfur, the polyhalogen-substituted aromatic compound, the aldehyde or condensate thereof and caustic alkali may be used. The organic solvent should have no active hydrogen atoms since in the use of the solvent with active hydrogen, there is a certain danger such as inhibiting by itself the polymerization and forming a substance by the reaction with the active hydrogen, which cause noxious reaction secondarily. The organic solvent is, for example, amides such as hexamethyl phosphate triamide(HMPA), N-methylpyrrolidone(NMP), tetramethylurea(TMU), dimethylacetamide(DMA), etherified polyethylene glycol such as polyethylene glycol dialkyl ether, sulfoxide such as tetramethylene sulfoxide. Among them, HMPA and NMP are particularly preferable because of the high chemical stability.

The used amount of the organic solvent in the present process is preferably in a range of 0.02 to 5 litres per gram-equivalent of the elementary sulfur. In the case of a large amount of the solvent, the concentration of the reactant is so low that the reaction velocity is too much reduced. On the other hand, in the case of a smaller amount of the solvent, the dissolution of the reactants is insufficient for the smooth proceeding of the polymerization.

The respective charge ratios of the polyhalogen-substituted aromatic compound, the aldehyde or condensate thereof and caustic alkali to the elementary sulfur is, in gram-equivalent, 0.7 to 1.3, preferably 0.8 to 1.2 of the polyhalogen-substituted aromatic compound, 0.6 to 1.4, preferably 0.8 to 1.2 of aldehyde or condensate thereof, and 1.2 to 2.5, preferably 1.4 to 1.7 of caustic alkali per 1 of elementary sulfur, with the proviso that the base unit of formaldehyde is calculated as 4 gram-equivalent, and the base unit of other aldehyde is calculated as 2 gram-equivalent. In the case where the charge amount of the starting material is out of the above-mentioned ratio, the excess amount of the reactant inhibits the normal proceeding of the

polymerization. The respective charge ratios of elementary sulfur, the polyhalogen-substituted aromatic compound, aldehyde or condensate thereof and caustic alkali of 1:0.8 to 1.2:0.8 to 1.2:1.4 to 1.7 in gram-equivalent are preferable for the most smooth proceeding of polymerization.

It will be necessary to make these four reactants in the above-mentioned ratio coexistent in the organic solvent simultaneously for proceeding the reaction extremely smoothly and speedily.

The reaction temperature of the present process is preferably in a range of 100 to 300°C. At the reaction temperature of lower than 100°C, the reaction velocity is extremely low and is not favorable from the economical view point, and on the other hand, at the reaction temperature of higher than 300°C, the solvent, the polymer formed or the like may occur the abnormal side-reaction. The temperature in a range of 150 to 280°C is particularly favorable for the smooth proceeding of the polymerization.

In the present process, the conventional system of polymerization such as batch system, continuous system can be adopted, and further as the batch system, a divided charge system wherein portions having the same composition of the starting materials are charged one after another is applicable.

As has been stated, since the anhydrous starting materials can be used in the present process, a dehydration step necessary in the process wherein sodium sulfide nonahydrate is used as one of the starting materials can be omitted in the present process, and accordingly, continuous system and divided charge system can be easily adopted in the present process. Especially the divided charge system is effective in controlling the heat of polymerization. In addition, the present process without accompaniment of the dehydration step is particularly profitable from the view point of energetic economy.

The atmosphere in the apparatus for polymerization is preferably non-oxidative, and it is preferable to substitute the air in the polymerization system with an inert gas such as nitrogen and argon in advance of the start of polymerization.

The thus-formed polymer is recovered by the steps of adding a solvent such as water, ether, halogenated hydrocarbon, aromatic and aliphatic hydrocarbons into the reaction mixture to precipitate the solid matters such as the polymer and inorganic salts formed during polymerization, and filtering, washing and drying the precipitated substances. Alternatively, the polymer may be also recovered by heating the reaction mixture under a reduced pressure or ordinary pressure to distill off only the solvent, washing the residual solid matters with a solvent such as water, ketone, alcohol, hydrocarbon, halogenated hydrocarbon and ether, neutralizing, filtering and drying.

By suitably selecting and combining the polyhalogen-substituted aromatic compounds, a polymer having branched chain and a polymer including at least 2 different monomeric units can be obtained. For instance, in the case where dichlorobenzene and a small amount of trichlorobenzene are combined as the polyhalogen-substituted aromatic compound, the phenylene sulfide polymer having branched chains is obtained. In the case of the use of a combination of p-dichlorobenzene and m-dichlorobenzene or p,p'-dichlorodiphenyl sulfone, the copolymeric polymer containing both

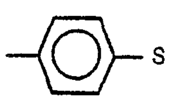 and 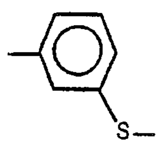 units, or both 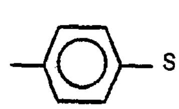 and

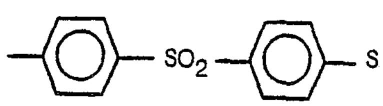 units is obtained.

Furthermore, by additionally charging a small amount of Cl—φ—COOH, Cl—φ—COOM and Cl—φ—OH wherein φ represents an aryl group into the reaction system, it is possible to produce the polymers having a group such as —COOH, —COOM, —OH or the like at the terminal of the polymer.

In addition, by the additional charge of the polyhalogen-subsituted compound such as trichlorobenzene or the like, or by the coexistence of an alkali metal salt of the carboxylic acid with the reactants of the present process, it is possible to obtain the sulfide polymer of a high molecular weight.

The polymer obtained by the present process can be molded into various useful articles by the known molding techniques such as injection molding, pressure molding, extrusion molding, centrifugal molding.

The thus molded articles can be modified to be the articles of more heat-resistant by curing after molding.

The polymer obtained according to the present process may be used by mixing with powdery fillers such as carbon black, powdery calcium carbonate, powdery silica and powdery titantium oxide and/or the fibrous fillers such as carbon fiber, glass fiber, asbestos and polyamide fiber.

And at least one of the synthetic resins such as polycarbonate, polyphenylene oxide, polysulfone, polyaryllene, polyacetal, polyimide, polyamide, polyester, polystyrene and terpolymer of acrylonitrile, butadiene and styrene may be mixed with the polymer obtained according to the present process.

The following Examples 1 to 30 illustrate the invention. Six Comparative Examples are also provided.

Examples 1 to 30:

In the following Examples, polyhalogen-substituted aromatic compound having a purity of at least 99.9% by weight, powdery sulfur and flaky caustic alkali were used. And as the apparatus for polymerization, an autoclave made of stainless steel (grade of SUS 304 of Japanese Industrial Standards) provided with an electromagnetic stirrer was used, provided that a capacity thereof used in Examples 1 to 27 was 500 ml and a capacity thereof used in Examples 28 to 30 was 20 litres.

After introducing the solvent and the reactants in the respective amounts shown in Table 1, substituting the gas phase of the autoclave with gaseous nitrogen completely and applying a pressure of 1 to 2 atmospheres, the contents of the autoclave was heated to the predetermined temperature to carry out the reaction while stirring. After the reaction was over, the autoclave was cooled to room temperature and opened to take out the reaction mixture, to which water was added to precipitate the polymer. The precipitate was collected by filtering, washing three times with hot water and once with acetone and drying at 70°C for one day to recover the polymer. However, in the cases of synthesizing homopolymer or copolymer of dichlorodiphenyl sulfone, methanol was used for washing the polymer instead of acetone. The yield of polymer shown in Table 1 is calculated from the recovered amount of the polymer based on the charged amount of elementary sulfur.

The amount of the polyhalogen-substituted aromatic compound represented by gram-equivalent in Tables 1 and 2 is the value obtained by calculation on the basis that the amount of one gram-equivalent of a polyhalogen-substituted aromatic compound equals to the amount of one mol of the compound divided by the number of halogen groups.

The relationship between the amount of aldehyde represented by mols and that represented by gram-equivalent is as follows:

One mol of formaldehyde equals to 4m gram-equivalent of formaldehyde, and one mol of other aldehyde equals to 2m gram-equivalent of the aldehyde, wherein m represents the number of base units of each aldehyde.

The abbreviations used in Tables 1 and 2 are as follows:

DCB/dichlorobenzene, TCB/trichlorobenzene, DBB/dibromobenzene, DCDPS/dichlorodiphenyl sulfone, DCT/dichlorotoluene, DCDPE/dichlorodiphenyl ether, DCBA/dichlorobenzoic acid, the other abbreviations are shown above.

In addition, the melt viscosity of the polymer shown in Tables 1 and 2 was determined by a KOKA-flowtester under a load of 10 $KG/cm^2$ at a temperature of 300°C.

TABLE 1

| Example | 1 | 2 | 3 | 4 |
|---|---|---|---|---|
| Sulfur (g-equivalent) | 1.26 | 1.26 | 1.68 | 1.68 |
| Polyhalogen-substituted aromatic compound (g-equivalent) | p-DCB 1.22 | p-DCB 1.22 and 1,2,4–TCB 0.006 | p-DCB 1.63 | p-DCB 1.62 and 1,2,4–TCB 0.008 |
| Reductant (q-equivalent) | PFA 1.20 | PFA 1.20 | PFA 1.62 | PFA 1.60 |
| Caustic alkali (g-equivalent) | NaOH 1.89 | NaOH 1.90 | NaOH 2.52 | NaOH 2.55 |
| Solvent (ml) | NMP 400 | NMP 400 | NMP 400 | NMP 400 |
| Temperature (°C) | {240 → {260 | 260 | {240 → {260 | 220 |
| Reaction Time (hr) | {0.5 → {0.5 | 2 | {2 → {1 | 24 |
| Yield of polymer (%) | 92.5 | 94.0 | 94.1 | 95.3 |
| Character of polymer | grayish white powder | grayish white powder | grayish white powder | grayish white powder |

TABLE 1 (Continued)

| Example | 5 | 6 | 7 | 8 |
|---|---|---|---|---|
| Sulfur (g-equivalent) | 1.68 | 1.68 | 1.26 | 2.10 |
| Polyhalogen-substituted aromatic compound (g-equivalent) | p-DCB 1.63 | p-DCB 1.62 and 1,3,5–TCB 0.008 | p-DCB 1.22 | p-DCB 2.03 and 1,3,5–TCB 0.01 |
| Reductant | PFA | PFA | PFA | PFA |
| (g-equivalent) | 1.60 | 1.60 | 1.20 | 2.00 |
| Caustic alkali | NaOH | NaOH | NaOH | NaOH |
| (g-equivalent) | 2.63 | 2.52 | 2.00 | 3.15 |
| Solvent | NMP | NMP | NMP | NMP |
| (ml) | 400 | 400 | 400 | 400 |
| Temperature (°C) | 230 | 210 | 160 | {160 → {180 → {210 |
| Reaction Time (hr) | 16 | 40 | 72 | {14 → {14 → {12 |
| Yield of polymer (%) | 95.0 | 96.3 | 81.7 | 99.2 |
| Character of polymer | grayish white powder | grayish white powder | grayish white powder | grayish white powder |
| Melt viscosity (poise) *) | | 88 | | |

*) 1 Poise = 10 A Pa.s

TABLE 1 (Continued)

| Example | 9 | 10 | 11 | 12* |
|---|---|---|---|---|
| Sulfur (g-equivalent) | 1.68 | 1.68 | 1.68 | 0.84 × 2 |
| Polyhalogen-substituted aromatic compound (g-equivalent) | p-DCB 1.60 | p-DCB 1.60 and 1,2,4–TCB 0.016 | p-DCB 1.60 | p-DCB 0.84 × 2 |
| Reductant (g-equivalent) | PFA 1.60 | PFA 1.60 | PFA 1.60 | PFA 0.80 × 2 |
| Caustic alkali (g-equivalent) | NaOH 2.52 | NaOH 2.60 | NaOH 2.52 | NaOH 1.26 × 2 |
| Solvent (ml) | NMP 400 | NMP 400 | NMP 400 | NMP 400 |
| Temperature (°C) | 160 → 210 | 200 | 200 | 210 → 210 |
| Reaction Time (hr) | 20 → 20 | 22 | 42 | 18 → 18 |
| Yield of polymer (%) | 98.9 | 87.2 | 94.8 | 92.2 |
| Character of polymer | grayish white powder | grayish white powder | grayish white powder | grayish white powder |

Note) In Example 12, the starting materials were divided in the two equal portions and the charge was carried out two times with each portion.

TABLE 1 (Continued)

| Example | 13 | 14 | 15 | 16 |
| --- | --- | --- | --- | --- |
| Sulfur (g-equivalent) | 1.68 | 1.68 | 1.68 | 1.68 |
| Polyhalogen-substituted aromatic compound (g-equivalent) | p-DCB 1.62 and 1,3,5–TCB 0.008 | p-DCB 1.63 | p-DCB 1.63 | p-DCB 1.63 |
| Reductant | POM | TOX | p-aldehyde | m-aldehyde |
| (g-equivalent) | 1.60 | 1.60 | 1.60 | 1.60 |
| Caustic alkali | NaOH | NaOH | NaOH | NaOH |
| (g-equivalent) | 2.60 | 2.52 | 2.55 | 2.52 |
| Solvent | NMP | NMP | NMP | NMP |
| (ml) | 400 | 400 | 400 | 400 |
| Temperature (°C) | 210 | 200 | 200 | 200 |
| Reaction Time (hr) | 21 | 17 | 17 | 22 |
| Yield of polymer (%) | 81.2 | 74.7 | 75.5 | 72.9 |
| Character of polymer | white powder | white powder | pale gray powder | pale brown powder |

TABLE 1 (Continued)

| Example | 17 | 18 | 19 | 20 |
|---|---|---|---|---|
| Sulfur (g-equivalent) | 1.68 | 1.26 | 1.68 | 1.68 |
| Polyhalogen-substituted aromatic compound (g-equivalent) | p-DCB 1.62 and 1,2,4−TCB 0.008 | p-DCB 1.22 | p-DCB 1.63 | p-DCB 1.63 |
| Reductant | Benzaldehyde | PFA | PFA | PFA |
| (g-equivalent) | 1.60 | 1.20 | 1.60 | 1.60 |
| Caustic alkali | NaOH | KOH | NaOH | NaOH |
| (g-equivalent) | 2.52 | 1.90 | 2.52 | 2.52 |
| Solvent | NMP | NMP | HMPA | PMA + HMPA |
| (ml) | 400 | 400 | 400 | 100 + 300 |
| Temperature (°C) | {180 → {250 | 210 | 240 | 160 |
| Reaction Time (hr) | {20 → {20 | 16 | 4 | 66 |
| Yield of polymer (%) | 85.0 | 69.3 | 99.0 | 71.9 |
| Character of polymer | pale brown powder | pale brown powder | grayish white powder | grayish white powder |

TABLE 1 (Continued)

| Example | 21 | 22 | 23 | 24 | 25 |
|---|---|---|---|---|---|
| Sulfur (g-equivalent) | 1.26 | 1.26 | 1.26 | 1.68 | 1.26 |
| Polyhalogen-substituted aromatic compound (g-equivalent) | p-DCB 1.08 and m-DCB 0.12 | p-DCB 1.08 and DCDPS 0.12 | DCDPS 1.20 | p-DCB 1.43 and 2,4–DCT 0.20 | p-DBB 1.20 |
| Reductant | PFA | PFA | PFA | PFA | PFA |
| (g-equivalent) | 1.20 | 1.20 | 1.20 | 1.60 | 1.20 |
| Caustic alkali | NaOH | NaOH | NaOH | NaOH | NaOH |
| (g-equivalent) | 1.90 | 2.00 | 2.00 | 2.52 | 1.90 |
| Solvent | NMP | NMP | NMP | NMP | NMP |
| (ml) | 400 | 400 | 400 | 400 | 400 |
| Temperature (°C) | 160 → 210 | 160 → 210 | 160 | 240 | 220 |
| Reaction Time (hr) | 20 → 20 | 20 → 20 | 20 | 10 | 4 |
| Yield of polymer (%) | 86.0 | 86.3 | 77.7 | 70.1 | 93.2 |
| Character of polymer | grayish white powder | pale yellow powder | pale brown powder | white powder | white powder |

TABLE 1 (Continued)

| Example | 26 | 27 | 28 | 29 | 30* |
|---|---|---|---|---|---|
| Sulfur (g-equivalent) | 1.26 | 1.26 | 28.0 | 28.0 | 28.0 |
| Polyhalogen-substituted aromatic compound (g-equivalent) | p-DCB 1.02 and 4,4'-DCDPE 0.20 | p-DCB 1.20 and 3,5-DCBA 0.03 | p-DCB 28.0 | p-DCB 28.0 and 1,3,5-TCB 0.14 | p-DCB 28.0 |
| Reductant | PFA | PFA | PFA | PFA | PFA |
| (g-equivalent) | 1.20 | 1.20 | 28.0 | 28.0 | 28.0 |
| Caustic alkali | NaOH | NaOH | NaOH | NaOH | NaOH |
| (g-equivalent) | 1.90 | 1.92 | 42.0 | 42.0 | 42.0 |
| Solvent | HMPA | NMP | NMP | NMP | NMP |
| (ml) | 400 | 400 | 14000 | 14000 | 14000 |
| Temperature (°C) | 240 | 220 | 210 → 220 | 210 → 220 | 210 → 220 |
| Reaction Time (hr) | 10 | 18 | 3 → 7 | 3 → 5 | 3 → 7 |
| Yield of polymer (%) | 89.0 | 92.1 | 95.3 | 98.4 | 97.8 |
| Character of polymer | white powder | white powder | grayish white powder | grayish white powder | white powder |
| Melt viscosity (poise) | | | 41 | 125 | 58 |

Note) In Example 30, the reaction was carried out in a coexistence of 28 mol of anhydrous sodium acetate.

Comparative Examples 1 to 6:

Comparative Examples 1 and 2 correspond respectively to Example 6, Comparative Example 3 corresponds to Example 18 and Comparative Examples 4, 5 and 6 respectively correspond to Examples 28, 29 and 30.

Conditions for polymerization in Comparative Examples are shown in Table 2.

In the case of Comparative Example 1 wherein no aldehyde was present in the reaction system, the concurrence of decomposition was recognized and the yield of polymer was far lower than that in Example 6 with the polymer of very low in melt viscosity.

In the case of Comparative Example 2 wherein no aldehyde was present in the reaction system and sodium carbonate was used instead of sodium hydroxide, the yield of polymer was very low.

In the case of Comparative Example 3 wherein potassium sulfide was used instead of the combination of sulfur, aldehyde and potassium hydroxide, the polymer was scarcely formed.

In the case of Comparative Examples 4 and 5 wherein no aldehyde was present in the reaction system, the concurrent of decomposition was recognized and the yield of the polymer was far lower than that in Examples 28 and 29 with the polymer of very low in melt viscosity.

In the case of Comparative Example 6 wherein no aldehyde was present in the reaction system, the yield of the polymer was very low with the polymer of very low in melt viscosity even in the coexistence of sodium acetate.

TABLE 2

| Example | 1 | 2 | 3 | 4 | 5 | 6 |
|---|---|---|---|---|---|---|
| Sulfur (g-equivalent) | 1.68 | 1.68 | $K_2S$ 1.26 | 28.0 | 28.0 | 28.0 |
| Polyhalogen-substituted aromatic compound (g-equivalent) | p-DCB 1.62 and 1,3,5–TCB 0.008 | p-DCB 1.62 and 1,3,5–TCB 0.008 | p-DCB 1.22 | p-DCB 28.0 | p-DCB 28.0 and 1,3,5–TCB 0.14 | p-DCB 28.0 |
| Reductant (g-equivalent) | none | none | none | none | none | none |
| Caustic alkali (g-equivalent) | NaOH 2.52 | $Na_2CO_3$ 2.52 | none | NaOH 42.0 | NaOH 42.0 | NaOH 42.0 |
| Solvent (ml) | NMP 400 | NMP 400 | NMP 400 | NMP 14000 | NMP 14000 | NMP 14000 |
| Temperature (°C) / Reaction Time (hr) | 210 / 40 | 210 / 40 | 210 / 16 | {210 / 3} → {220 / 7} | {210 / 3} → {220 / 5} | {210 / 3} → {220 / 7} |
| Yield of polymer (%) | 63.0 | 15.0 | almost zero | 64.5 | 67.1 | 69.1 |
| Character of polymer | dark brown powder | dark brown powder | dark brown powder | dark brown powder | dark brown powder | dark brown powder |
| Melt viscosity (poise) | about 1 | less than 1 | | about 1 | about 2 | about 2 |

**Claims**

1. A process for producing an aromatic sulfide copolymer, which process comprises reacting together in an organic solvent elemental sulfur, a polyhalogen-substituted aromatic compound, an aldehyde or condensate thereof and a caustic alkali.

2. A process according to claim 1, wherein the elemental sulfur, the polyhalogen-substituted aromatic compound, the aldehyde or condensate thereof and the caustic alkali are present in the organic solvent in a gram-equivalent ratio of 1:0.8 to 1.2:0.8 to 1.2:1.4 to 1.7.

3. A process according to claim 1 or 2, wherein the reaction is carried out at a temperature of 150 to 280°C.

4. A process according to any one of the preceding claims, wherein the elemental sulfur is rhombic sulfur, monoclinic sulfur or amorphous sulfur.

5. A process according to any one of the preceding claims, wherein the polyhalogen-substituted aromatic compound is dichlorobenzene, dibromobenzene, trichlorobenzene, 1-methoxy-2,5-dichlorobenzene, 2,5-dichlorotoluene, 1,4-dichloronaphthalene, 4,4′-dichlorobiphenyl, 4,4′-dichlorodiphenyl ether, 3,5-dichlorobenzoic acid, 3,3′-dichlorodiphenyl sulfone, 3,3′-dichlorodiphenyl sulfoxide or 3,3′-dichlorodiphenyl sulfide.

6. A process according to any one of the preceding claims wherein the aldehyde or condensate thereof is acetaldehyde, propionaldehyde, butylaldehyde, benzaldehyde, paraformaldehyde, trioxane, polyoxymethylene, paraldehyde or metaldehyde.

7. A process according to any one of the preceding claims, wherein the organic solvent is an amide, etherified polyethylene glycol or sulfoxide.

8. A process according to claim 7, wherein the organic solvent is hexamethyl phosphate triamide, N-methylpyrrolidone, tetramethylurea, dimethylacetamide, polyethylene glycol dialkyl ether or tetramethylene sulfoxide.

9. A process according to any one of the preceding claims, wherein the organic solvent is used in 0.02 to 5 litres per gram-equivalent of the elemental sulfur.

10. Molded articles prepared from an aromatic sulfide copolymer produced by a process as claimed in any one of the preceding claims.

**Patentansprüche**

1. Verfahren zur Herstellung eines aromatischen Polysulfid, wobei das Verfahren das miteinander Reagieren von elementarem Schwefel, einer polyhalogensubstituierten aromatischen Verbindung, einem Aldehyd oder Kondensat davon und einem Ätzalkali in einem organischem Lösungsmittel umfaßt.

2. Verfahren nach Anspruch 1, worin der elementare Schwefel, die polyhalogensubstituierte aromatische Verbindung, das Aldehyd oder Kondensat davon und der Ätzalkali in dem organischen Lösungsmittel in einem Grammäquivalent-Verhältnis von 1:0,8 bis 1,2:0,8 bis 1,2:1,4 bis 1,7 vorhanden sind.

3. Verfahren nach Anspruch 1 oder 2, worin die Reaktion bei einer Temperatur von 150 bis 280°C durchgeführt wird.

4. Verfahren nach einem der vorstehenden Ansprüche, worin der elementare Schwefel α-Schwefel, β-Schwefel oder amorpher Schwefel ist.

5. Verfahren nach einem der vorstehenden Ansprüche, worin die polyhalogensubstituierte aromatische Verbindung Dichlorbenzol, Dibrombenzol, Trichlorbenzol, 1-Methoxy-2,5-dichlorbenzol, 2,5-Dichlortoluol, 1,4-Dichlornaphtalin, 4,4′-Dichlorbiphenyl, 4,4′-Dichlordiphenyläther, 3,5-Dichlorbenzoesäure, 3,3′-Dichlordiphenylsulfon, 3,3′-Dichlordipenylsulfoxid oder 3,3′-Dichlordiphenylsulfid ist.

6. Verfahren nach einem der vorstehenden Ansprüche, worin das Aldehyd oder Kondensat davon Azetaldehyd, Propionaldehyd, Butylaldehyd, Benzaldehyd, Paraformaldehyd, Trioxan, Polyoxymethylen, Paraldehyd oder Metaldehyd ist.

7. Verfahren nach einem der vorstehenden Ansprüche, worin das organische Lösungsmittel ein Amid, ein verestertes Polyäthyleneglykol oder Sulfoxid ist.

8. Verfahren nach Anspruch 7, worin das organische Lösungsmittel Hexamethylphosphattriamid, N-Methylpyrrolidon, Tetramethylharnstoff, Dimethylazetamid, Polyethylenglykoldialkyläther oder Tetramethylensulfoxid ist.

9. Verfahren nach einem der vorstehenden Ansprüche, worin das organische Lösungsmittel in 0,02 bis 5 Liter pro Grammäquivalent des elementaren Schwefels verwendet wird.

10. Geschmolzene Artikel, die aus einem aromatischen Sulfidcopolymer hergestellt wurden, das durch ein Verfahren nach einem der vorstehenden Ansprüche hergestellt wird.

**Revendications**

1. Procédé pour la production d'un copolysulfure aromatique, caractérisé en ce que l'on fait réagir dans

un solvant organique du soufre élémentaire, un composé aromatique polyhalo-substitué, un aldéhyde ou un condensat de celui-ci et un alcali caustique.

2. Procédé suivant la revendication 1, caractérisé en ce que le soufre élémentaire, le composé aromatique polyhalo-substitué, l'aldéhyde ou un condensat de celui-ci et l'alcali caustique sont présents dans le solvant organique selon un rapport en équivalent-gramme de 1:0,8 à 1,2:0,8 à 1,2:1,4 à 1,7.

3. Procédé suivant la revendication 1 ou 2, caractérisé en ce que la réaction est effectuée à une température de 150 à 280°C.

4. Procédé suivant l'une quelconque des revendications précédentes, caractérisé en ce que le soufre élémentaire est du soufre rhombique, du soufre monoclinique ou du soufre amorphe.

5. Procédé suivant l'une quelconque des revendications précédentes, caractérisé en ce que le composé aromatique polyhalo-substitué est le dichlorobenzène, le dibromobenzène, le trichlorobenzène, le 1-méthoxy-2,5-dichlorobenzène, le 2,5-dichlorotoluène, le 1,4-dichloronaphtalène, le 4,4'-dichlorobiphényle, l'éther 4,4'-dichlorodiphénylique, l'acide 3,5-dichlorobenzoïque, la 3,3'-dichlorodiphénylsulfone, le 3,3'-dichlorodiphénylsulfoxyde ou le sulfure de 3,3'-dichlorodiphényle.

6. Procédé suivant l'une quelconque des revendications précédentes, caractérisé en ce que l'aldéhyde ou un condensat de celui-ci est l'acétaldéhyde, le propionaldéhyde, le butylaldéhyde, le benzaldéhyde, le paraformaldéhyde, le trioxanne, le polyoxyméthylène, le paraldéhyde ou le métaldéhyde.

7. Procédé suivant l'une quelconque des revendications précédentes, caractérisé en ce que le solvant organique est un amide, un polyéthylèneglycol éthérifié ou un sulfoxyde.

8. Procédé suivant la revendication 7, caractérisé en ce que le solvant organique est l'hexaméthylphosphate triamide, la N-méthylpyrrolidone, la tétraméthylurée, le diméthylacétamide, l'éther dialcoylique de polyéthylèneglycol ou le tétraméthylènesulfoxyde.

9. Procédé suivant l'une quelconque des revendications précédentes, caractérisé en ce que le solvant organique est utilisé à raison de 0,02 à 5 litres par équivalent-gramme de soufre élémentaire.

10. Articles moulés préparés à partir d'un copolysulfure aromatique produit par un procédé suivant l'une quelconque des revendications précédentes.